# EUROPEAN PATENT APPLICATION

(11) **EP 4 618 555 A1**
(43) Date of publication of application: **17.09.2025**
(21) Application number: 23888136.1
(22) Date of filing: 10.11.2023
(51) Int. Cl.: H04N 21/2187

(54) **METHOD AND APPARATUS FOR ONLINE LIVE STREAMING, AND DEVICE AND STORAGE MEDIUM**

(30) Priority: 10.11.2022 CN 202211408006
(71) Applicant: Beijing Zitiao Network Technology Co., Ltd., Beijing 100190 (CN)
(72) Inventor: XING, Duolai, Beijing 100028 (CN); HU, Yi, Beijing 100028 (CN); LI, Yijie, Beijing 100028 (CN)
(74) Representative: Grünecker Patent- und Rechtsanwälte PartG mbB
(86) International application number: PCT/CN2023/131114
(87) International publication number: WO 2024/099451

(57) **Abstract**

According to embodiments of the present disclosure, a method, apparatus, device and storage medium for online live streaming are provided. The method comprises: presenting, in a user interface of a live stream, a first interface element associated with an object in a live streaming content; in response to receiving a predetermined operation on the first interface element, presenting a media content associated with the object in the user interface; presenting a second interface element in association with the media content; and in response to receiving a predetermined operation on the second interface element, triggering, in the live stream, a predefined interaction associated with the object. In this way, it is possible to present user's expressions or other appropriate content about the live streaming object in an intuitive and focused manner, simplify the operation of user's expressions, and improve the efficiency and convenience of user's expressions.

## Description

This application claims the benefit of Chinese Patent Application No. 202211408006.3, entitled "METHOD, APPARATUS, DEVICE AND STORAGE MEDIUM FOR ONLINE LIVE STREAMING", filed on Nov. 10, 2022, the entirety of which is incorporated herein by reference.

### FIELD

Example embodiments of the present disclosure generally relate to the field of computer technologies, and in particular, to a method, apparatus, device and computer readable storage medium for online live streaming.

### BACKGROUND

With the development of computer technologies, various live streaming can provide people with various content such as information, education and entertainment. Various ongoing events may be played in real time in a live stream. Users who enter the live stream to watch live streaming content may have viewpoints on live streaming events or event-related characters.

### SUMMARY

**In** a first aspect of the present disclosure, a method for online live streaming is provided. The method includes: presenting, in a user interface of a live stream, a first interface element associated with an object in a live streaming content; in response to receiving a predetermined operation on the first interface element, presenting a media content associated with the object in the user interface; presenting a second interface element in association with the media content; and in response to receiving a predetermined operation on the second interface element, triggering, in the live stream, a predefined interaction associated with the object.

In a second aspect of the present disclosure, an apparatus for online live streaming is provided. The apparatus includes: a first interface element presentation module configured to present, in a user interface of a live stream, a first interface element associated with an object in a live streaming content; a media content presentation module configured to, in response to receiving a predetermined operation on the first interface element, present a media content associated with the object in the user interface; a second interface element presentation module configured to present a second interface element in association with the media content; and an interaction trigger module configured to, in response to receiving a predetermined operation on the second interface element, trigger, in the live stream, a predefined interaction associated with the object.

In a third aspect of the present disclosure, an electronic device is provided. The device includes: at least one processing unit; and at least one memory coupled to the at least one processing unit and storing instructions for execution by the at least one processing unit, the instructions, when executed by the at least one processing unit, causing the electronic device to perform the method of the first aspect.

In a fourth aspect of the present disclosure, a computer readable storage medium is provided. The computer readable storage medium stores a computer program, and the computer program is executable by a processor to implement the method of the first aspect.

It should be understood that the content described in this section is not intended to limit key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numerals refer to the same or similar elements, wherein:
FIG. 1 illustrates a schematic diagram of an example environment in which embodiments of the present disclosure can be implemented;
FIG. 2A illustrates a schematic diagram of an example user interface for presenting a first interface element according to some embodiments of the present disclosure;
FIGS. 2B to 2D illustrate schematic diagrams of example user interfaces for presenting media contents according to some embodiments of the present disclosure;
FIG. 2E illustrates a schematic diagram of an example user interface for presenting predefined comments according to some embodiments of the present disclosure;
FIGS. 3A to 3C illustrate schematic diagrams for presenting example user interfaces according to some other embodiments of the present disclosure;
FIG. 4 illustrates a flowchart of a process for online live streaming according to some embodiments of the present disclosure;
FIG. 5 illustrates a block diagram of an apparatus for online live streaming according to some embodiments of the present disclosure; and
FIG. 6 illustrates an electronic device in which one or more embodiments of the present disclosure may be implemented.

### DETAILED DESCRIPTION

Embodiments of the present disclosure will be described in more detail below with reference to the accompanying drawings. While certain embodiments of the present disclosure are illustrated in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

In the description of the embodiments of the present disclosure, the terms "including" and similar terms should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

Herein, unless explicitly stated, "in response to A" performs one step and does not imply that this step is performed immediately after "A", but may include one or more intermediate steps.

It should be understood that the data (including but not limited to the data itself, the obtaining or use of the data) involved in the technical solution should comply with requirements of the corresponding laws and regulations and related rules.

It should be understood that, before the technical solutions disclosed in the embodiments of the present disclosure are used, the types of personal information related to the present disclosure, the usage scope, the usage scenario and the like should be notified to the user in an appropriate manner according to the relevant laws and regulations, and the authorization of the user is obtained.

For example, in response to receiving an active request from a user, prompt information is sent to the user to explicitly prompt the user that the requested operation will need to obtain and use personal information of the user, so that the user can autonomously select whether to provide personal information to software or hardware performing the operation of the technical solution of the present disclosure according to the prompt information.

As an optional but non-limiting implementation, in response to receiving an active request of the user, a manner of sending prompt information to the user may be, for example, a pop-up window, and prompt information may be presented in a text manner in the pop-up window. In addition, the pop-up window may further carry a selection control for the user to select "agree" or "disagree" to provide personal information to the electronic device.

It should be understood that the foregoing process of notifying and obtaining user authorization is merely illustrative, and does not constitute a limitation on implementations of the present disclosure, and other manners of meeting related laws and regulations may also be applied to implementations of the present disclosure.

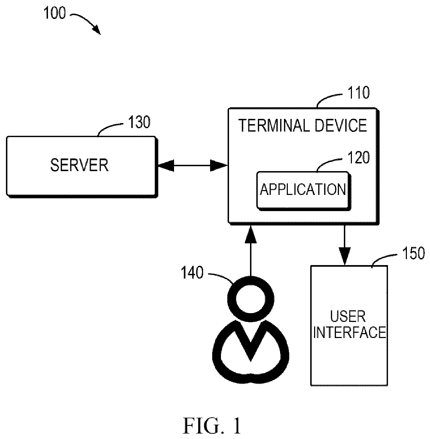

FIG. 1 illustrates a schematic diagram of an example environment 100 in which embodiments of the present disclosure can be implemented. In this example environment 100, an application 120 is installed in the terminal device 110. A user 140 may interact with the application 120 via the terminal device 110 and/or an attachment device of the terminal device 110. The application 120 may be a live streaming application. The application 120 may provide the live streaming content to users in the live stream, and users of the live stream may comment on the live streaming content of the live stream. Such users may include, for example, an ordinary viewer, a host, or the like in the live stream. The terminal device 110 may present a user interface 150 of the application 120. The user interface 150 may include various interfaces that may be provided by the application 120, such as a personal homepage, a detail interface of media content, a content creation interface, a content posting interface, and the like.

In some embodiments, the terminal device 110 communicates with the server 130 to enable provisioning of services to the application 120. The terminal device 110 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the terminal device 110 may also support any type of interface for a user (such as a "wearable" circuit, etc.). The server 130 may be various types of computing systems/servers capable of providing computing power, including, but not limited to, mainframes, edge computing nodes, computing devices in a cloud environment, and the like.

It should be understood that the structures and functions of the various elements in the environment 100 are described for illustrative purposes only and do not imply any limitation to the scope of the present disclosure.

Generally, a comment area is provided in a user interface of a live stream. In the comment area, users may post comments to express their viewpoints on the live streaming content. Live streaming contents may include, but is not limited to, various games, such as sporting events, gaming events, talent competitions, and the like, as well as various entertainment and leisure variety shows and other events. For example, when watching a live streaming of two team games, a user may express support for a supported team, player, etc. by posting a comment.

During the live streaming of the event, the content that different users want to express varies greatly, so the comment content is rich and colorful. However, current comments cannot intuitively present user's expressions.

In addition, at present, various live streams lack background guidance for user's expressions, resulting in a user having no effective way to post comments.

The embodiments of the present disclosure provide a solution for online live streaming. According to the solution, in a user interface of a live stream, a first interface element (e.g., a control for triggering presentation of a media content) associated with an object in a live streaming content is presented. In response to receiving a predetermined operation on the first interface element, a terminal device presents a media content (e.g., a video) associated with the object in the user interface. Further, a second interface element (e.g., a control for triggering a predefined interaction) is presented in the user interface. In response to receiving a predetermined operation on the second interface element, the terminal device triggers, in the live stream, a predefined interaction associated with the object.

Based on this approach, the embodiments of the present disclosure are able to present the media content associated with the object for the predetermined operation on the first interface element in the user interface of the live stream. The media content can guide user's expressions of the object. The predefined interactions corresponding to the user's expressions of the object are then presented through the predetermined operation on the second interface element. In this way, it is possible to present user's expressions or other appropriate content about the live streaming object in an intuitive and focused manner in the live stream, simplify the operation of user's expressions, and improve the convenience of user's expressions.

Some example embodiments of the present disclosure will be described below with continued reference to the accompanying drawings. In the example embodiments described below, the user interface will be described primarily by taking the presentation of a live streaming content 203 in the live stream as an example. In the example embodiments to be described below, the concepts of the present disclosure will be described primarily by presenting the first and second interface elements on the user interface, and the user interacting with the first and second interface elements. For example, the first and second interface elements may be controls or components set by the terminal device 110 for interaction. For example, the first interface element may be a control for triggering presentation of the media content, and the second interface element may be a control for triggering the predefined interaction.

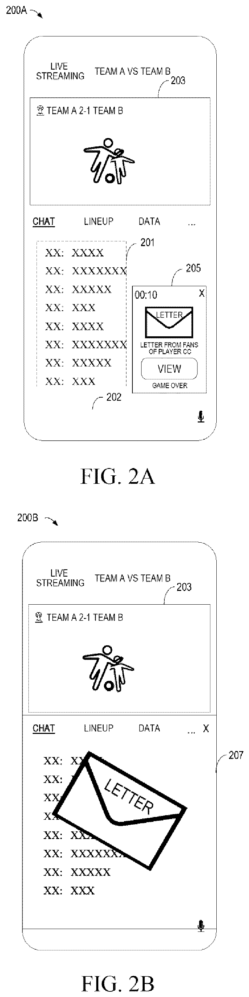

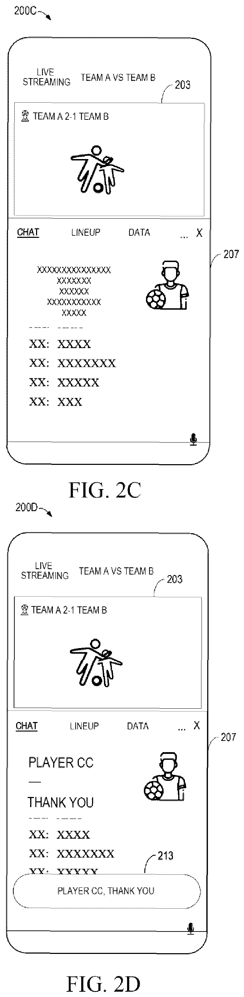

FIGS. 2A to 2E schematically illustrate schematic diagrams of presenting example user interfaces according to some embodiments of the present disclosure. Some example embodiments of the present disclosure are described below by using a display direction of the user interface provided by the terminal device 110 as vertical.

FIG. 2A illustrates a schematic diagram of an example user interface 200A for presenting a first interface element according to some embodiments of the present disclosure. For example, as shown in FIG. 2A, the user interface includes a display area of the live streaming content 203. The display area of the live streaming content 203 is used to present the live streaming content 203 being played. For example, game events (football games) of various games, etc. The user interface may further include a comment area 201. A session (e.g., a session such as a comment, a chat, etc.) associated with the live streaming content may be presented in the comment area 201. In some embodiments, the comment area 201 may be presented by clicking a button or icon, such as "chat", located at a predetermined position of the user interface (e.g., below the display area of the live streaming content 203). In some embodiments, the user comment may be presented in the comment area 201 by inputting the corresponding content in the text and icon input box 202 at the bottom of the user interface.

In some embodiments, unlike conventional user interfaces, the terminal device 110 may provide, in the user interface, a first interface element 205 associated with an object in the live streaming content. The first interface element 205 may be a functional component for triggering presentation of media content. The functional component is primarily used to deliver a service to a particular user interface. In the embodiments of the present disclosure, the functional component is used to deliver the media content to the live stream. It is noted that the visual style of the first interface element 205 may have a variety of designs according to actual application, and FIG. 2A only gives an example.

Here, an "object" in the live streaming content may be a person and/or an event related to the live streaming content. For example, for a ball game, the object in the live streaming content may be the game itself, or may be a player, referee, coaches, and so on who participates in the game directly or indirectly.

In some embodiments, the first interface element 205 may display additional information, for example, description information corresponding to the media content. For example, the description information may be related to a party or member in the event. Taking FIG. 2A as an example, the description information "letter from fans of player CC" is presented on the first interface element 205. In this way, the user may clearly know what content will be triggered by the interaction of the first interface element through the first interface element. In some embodiments, the first interface element 205 may further display other additional information, an identifier, and the like, so as to achieve effects such as user guidance, visual diversity, and the like. The embodiments of the present disclosure are not limited in this regard.

Alternatively, or additionally, the first interface element 205 may further include controls for interactive operations. Continuing with FIG. 2A as an example, a "view" control is presented on the first interface element 205. The terminal device 110 receives a click on the "view" control to present the media content associated with the object in the user interface, which is described in detail below.

In some embodiments, the first interface element 205 may be presented at a predetermined position in the user interface. Continuing with FIG. 2A as an example, the first interface element 205 is presented at a blank area to the right of the comment area 201. Alternatively, or additionally, the first interface element 205 may further be superposed on the comment area 201 in a semi-transparent manner.

The specific style, presentation timing, and/or presentation position of the first interface element 205 may be configurable, for example, may be configured by an operator of the current live stream. The embodiments of the present disclosure are not specifically limited in this aspect.

In some embodiments, after the user interface is presented with the first interface element 205, the terminal device 110 receives a predetermined operation on the first interface element 205, to present the media content associated with the object in the user interface. The predetermined operation may be, for example, a click or selection on the first interface element 205 itself or a particular area therein (e.g., "view"). For example, the media content may be a captured video, a manufactured animation, a dynamic image, and other persistent visual content, a still image, an audio, a text, or any combination thereof. The media content may further display, for example, character information, event information, expression guide words provided by the background, and the like.

FIGS. 2B to 2D illustrate schematic diagrams of example user interfaces 200B, 200C and 200D for presenting media contents according to some embodiments of the present disclosure. For example, the terminal device 110 receives a predetermined operation on the first interface element 205, and presents a media content 207 associated with the object in the user interface. In this example, the media content 207 is a video. FIGS. 2B to 2D illustrate partial example contents of the media content 207. The media content 207 may be associated with an object in the current live streaming content, such as a certain player in a team game event. In the embodiments of the present disclosure, a second interface element 213 is presented in association with the media content 207 in addition to the media content, as shown in FIG. 2D. The second interface element 213 will be described in detail below.

In some embodiments, in response to receiving no predetermined operation on the first interface element after the first interface element 205 being presented for a duration exceeding a predetermined duration, the terminal device 110 ceases the presenting of the first interface element 205. The predetermined duration is any duration configurable. In some embodiments, a countdown of the predetermined duration may be presented in association with the first interface element. For example, in the user interface of FIG. 2A, the first interface element 205 exhibits countdown xx seconds (10 seconds), xx seconds after which the first interface element 205 is not visible to the user.

In some embodiments, while the first interface element 205 is presented, if an operation to cancel presentation of the first interface element 205 is received, for example, if the user clicks a close button on the first interface element 205, the presenting of the first interface element 205 may also be ceased in the user interface of the live stream. In some embodiments, during presentation of the first interface element 205, the user may also be allowed to perform other operations in the live stream, for example, inputting a comment, switching a navigation tag (e.g., a navigation tag "chat", "lineup", "data" shown in FIG. 2A). In some embodiments, while the media content 207 is presented, the presentation of the media content 207 may be stopped in the user interface of the live stream, e.g., if the user clicks on the associated close button.

According to the embodiments of the present disclosure, by providing the first interface element for presenting the media content associated with the object in the live streaming content, an express entry or pathway may be provided for the user. In this way, when the user watches the live streaming content, the user is guided to perform expression by using the first interface element.

As previously described, in addition to presenting the media content, the second interface element is presented in association with the media content in the user interface of the live stream. The presentation of the second interface element may be any suitable timing during the presentation of the media content. For example, with continued reference to FIG. 2D, in response to the presentation of the media content approximating the end, the second interface element 213 is presented in the user interface of the live stream. Here, the "approximating an end" may refer to at the time of completing the presentation of the media content, or within a predetermined period before the end of the presentation. Alternatively or additionally, the second interface element 213 is presented in the user interface in response to any predetermined point in time during the presentation of the media content (e.g., two-thirds of the overall playback time of the media content). Certainly, the second interface element may also be presented throughout the presentation of the media content, and the embodiments of the present disclosure are not limited in this aspect.

The second interface element 213 is an element for triggering the predefined interaction associated with the object. In some embodiments, the second interface element 213 may include a clickable button. In some examples, the second interface element may be superposed on the media content or presented in any suitable position in the user interface. It is noted that the visual style of the second interface element 213 may have a variety of designs according to actual application, and FIG. 2D only gives an example. In some embodiments, the second interface element 213 may display description information corresponding to a predefined interaction to be triggered. In this way, the user may know the subsequent possible predefined interaction through the second interface element. In some embodiments, the second interface element 213 may be displayed with a content that expresses the user's attitude, viewpoint, and the like for the object.

In response to receiving the predetermined operation on the second interface element 213, the terminal device 110 triggers the predefined interaction associated with the object in the live stream. The predetermined operation on the second interface element may, for example, perform a click or selection on the second interface element 213 itself or a particular area therein. This operation will trigger the predefined interaction.

The predefined interaction may include various interaction manners allowed by the live stream. In the embodiments of the present disclosure, a manner of conveniently and quickly triggering a particular interaction by the user after the predetermined media content is presented is provided. In some embodiments, the predefined interaction may be related to a predefined comment. In some embodiments, the second interface element 213 may be displayed with description information corresponding to the predefined comment, for example, all or part of the content of the predefined comment, so that the user may know the comment content to be triggered subsequently. In some embodiments, the predefined comment may be associated with events and/or characters in the live streaming content. For example, as shown in FIG. 2D, the second interface element 213 may be displayed with the predefined comment associated with the object, such as "player CC, thank you".

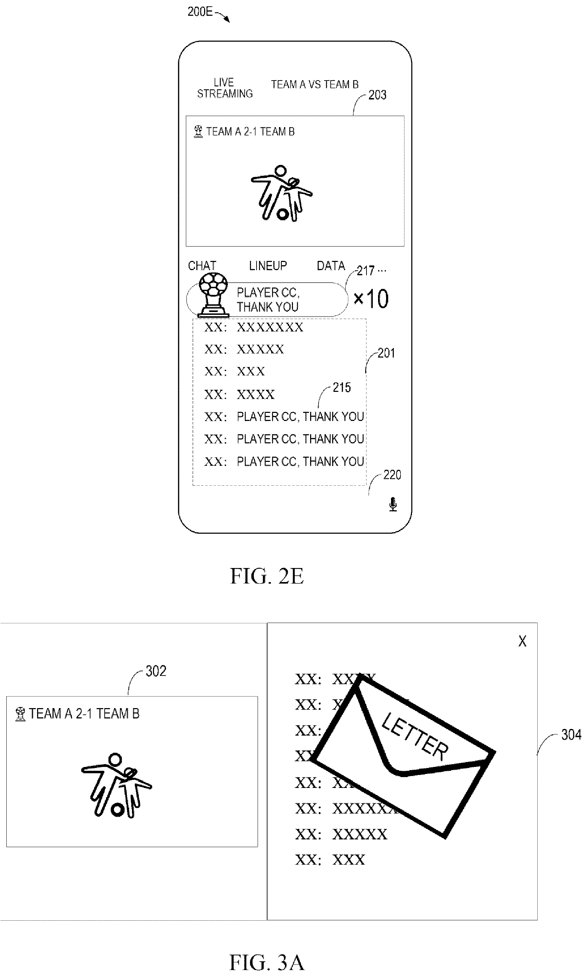

In some embodiments, the predefined interaction may include presenting a predefined comment in the live stream. That is, by clicking the second interface element 213, the current user may automatically post the predefined comment as a user comment to the live stream. FIG. 2E illustrates a schematic diagram of an example interface 200E for presenting a predefined comment according to some embodiments of the present disclosure. For example, in response to receiving a click performed by the user on the second interface element 213, a predefined comment 215 is presented in the comment area 201 of the user interface. In some embodiments, the predefined interaction may include inputting a predefined comment into a comment input box for confirmation by the user. For example, in FIG. 2E, in response to receiving a click performed by the user on the second interface element 213, the predefined comment 215 is input in the comment input box 220. In this way, the user may select whether to further edit the predefined comment and then send it.

In some embodiments, in response to a number of predefined comments 215 in the live stream exceeding a threshold number, the predefined comment 215 is presented as a popular comment at a predetermined position of the user interface. For example, as shown in FIG. 2E, the terminal device 110 may set a position above the comment area 201 as a predetermined position of a popular comment, so that a popular comment 217 may be displayed more clearly. For example, the popular comment 217 is a comment "player CC, thank you" that is consistent with the predefined comment 215.

In some embodiments, the real-time number of predefined comments may also be presented near a predetermined position of the user interface. For example, as shown in FIG. 2E, a presentation form of a number of popular comments may be an increment symbol and numeral, e.g., "× numeral (e.g., 10)", or "+ numeral (e.g., 10)". If the number of predefined comments exceeds another threshold number (e.g., 999), and the number of predefined comments continues to increase, the numeral presented does not continue to increase, staying at respective threshold numbers. By allowing the user to conveniently trigger the input of the predefined comment by clicking the second interface element, a certain number of matching user comments may be quickly accumulated, thereby triggering the presentation of the popular comment.

In some embodiments, in addition to the interaction related to the predefined comment, alternatively or additionally, other interaction manners that may be triggered by the second interface element 213 may be set. Other interactions may include, for example, transmissions of predetermined gifts and/or effects that may be provided in the live stream. Before the second interface element 213 is triggered, the user may be notified of the predefined interaction that would be triggered by the predetermined operation on the second interface element 213, so that the user may trigger it according to needs. For example, the second interface element 213 may be displayed with descriptive information related to a predetermined gift and/or effect, such as "send XX gift/effect". In this way, the user may freely decide whether to trigger further interaction.

In some embodiments, there may be a plurality of presentation positions of the media content in the user interface of the live stream. This may depend on the configuration of the live stream, a terminal device used by the user, and so on. While the media content is triggered to be presented, the media content may be presented in a further screen area with the live streaming content being maintained in a screen area of the user interface. This may not interfere with the live streaming content being played. The screen area for presenting the media content may be arbitrarily configured and selected. In the example of FIGS. 2B to 2D, the live streaming content and the display area of the media content are divided up and down. For example, the live streaming content is presented in the top half screen area and the media content 207 is presented in the lower half screen area.

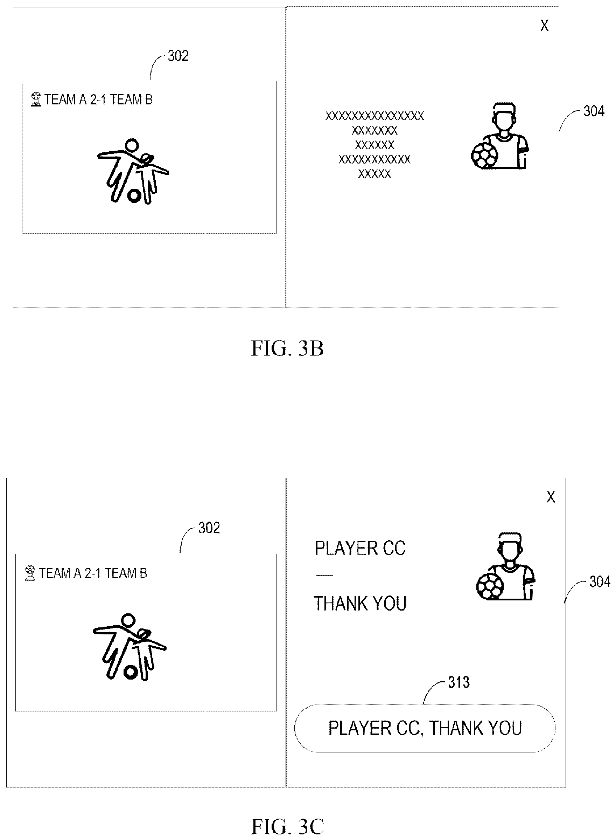

For example, FIGS. 3A to 3C illustrate schematic diagrams of presenting example user interfaces according to some embodiments of the present disclosure. In these examples, assume that the user interface is presented in a landscape manner.

The user interfaces presented in FIGS. 3A to 3C correspond to the user interfaces in FIGS. 2B to 2D, respectively, except that the terminal device 110 provides a laterally displayed user interface. At this time, the live streaming content and the display area of the media content may be divided on the left and right. For example, a live streaming content 302 is presented in the left half screen area, and a media content 304 is presented in the right half screen area. Further, a second interface element 313 may also be presented in association with the media content 304 to facilitate triggering a predefined interaction.

In some embodiments, a superposed display area may be provided in a screen area of the user interface, and the screen area is used for presenting the live streaming content. For example, if the live streaming content is displayed in full screen, the media content triggered by the first interface element may be presented in a superposed manner. In such an embodiment, the superposed display area of the media content may at least partially cover the live streaming content. In some embodiments, the superposed display area may be presented as at least partially transparent style. The specific setting manner of the superposed display area may be configured according to actual application, which is not limited in the embodiments of the present disclosure.

Of course, only some example presentation manners of the live streaming content and the media content are provided herein. The presentation position and size of the media content may be specifically configured according to actual application requirements.

According to the embodiments of the present disclosure, the predefined interaction of the user corresponding to the expression of the live streaming content is quickly triggered by the predetermined operation for the second interface element. In this way, it is possible to present user's expressions about the live streaming object in an intuitive and focused manner in the live stream, simplify the operation of user's expressions, and improve the convenience of user's expressions.

It should be understood that the user interface presented in the drawings of the present disclosure is merely an example, and various interface designs may actually be present. Individual elements in the interface may have different arrangements, different names, and different visual representations, one or more of which may be omitted or replaced, and one or more other elements may also be present. The embodiments of the present disclosure are not limited in this respect.

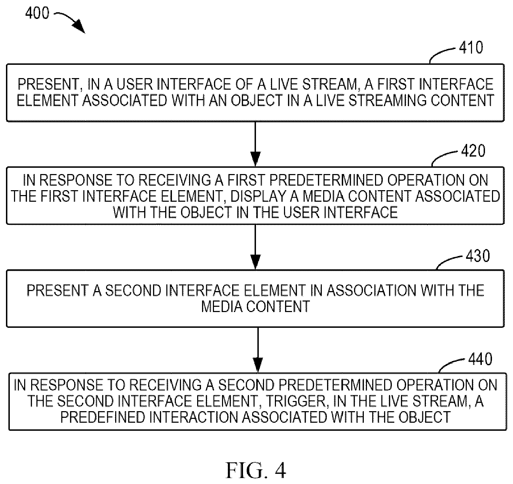

FIG. 4 illustrates a flowchart of an example process 400 for online live streaming according to some embodiments of the present disclosure. The process 400 may be implemented independently by the terminal device 110 of FIG. 1, or by a combination of the terminal device 110 and other computing devices. For ease of discussion, the process 400 will be described with reference to the environment 100 of FIG. 1. Some embodiments shown above in connection with FIGS. 2A to 3C may be implemented by the process 400.

As shown in FIG. 4, at block 410, the terminal device 110 presents, in a user interface of a live stream, a first interface element associated with an object in a live streaming content.

At block 420, in response to receiving a predetermined operation on the first interface element, the terminal device 110 presents a media content associated with the object in the user interface.

At block 430, the terminal device 110 presents a second interface element in association with the media content.

At block 440, in response to receiving a predetermined operation on the second interface element, the terminal device 110 triggers, in the live stream, a predefined interaction associated with the object.

In some embodiments, the process may further include: in response to receiving no predetermined operation on the first interface element after the first interface element being presented for a duration exceeding a predetermined duration, ceasing the presenting of the first interface element.

In some embodiments, presenting the second interface element in association with the media content may include: in response to a presentation of the media content approximating an end, presenting the second interface element.

In some embodiments, presenting the media content associated with the object may include: presenting, with the live streaming content being maintained in a screen area of the user interface, the media content in a further screen area.

In some embodiments, presenting the media content associated with the object may include: providing a superposed display area in a screen area for the live streaming content in the user interface, for presenting the media content.

In some embodiments, the predefined interaction includes: presenting a predefined comment in the live stream, or inputting the predefined comment into a comment input box for user confirmation.

In some embodiments, the process may further include: in response to a number of the predefined comments in the live stream exceeding a threshold number, presenting the predefined comment as a popular comment at a predetermined position of the user interface.

In some embodiments, the first interface element includes a functional component. In some embodiments, the second interface element includes a clickable button.

In some embodiments, the first interface element is displayed with description information corresponding to the media content, and the second interface element is displayed with description information corresponding to the predefined interaction.

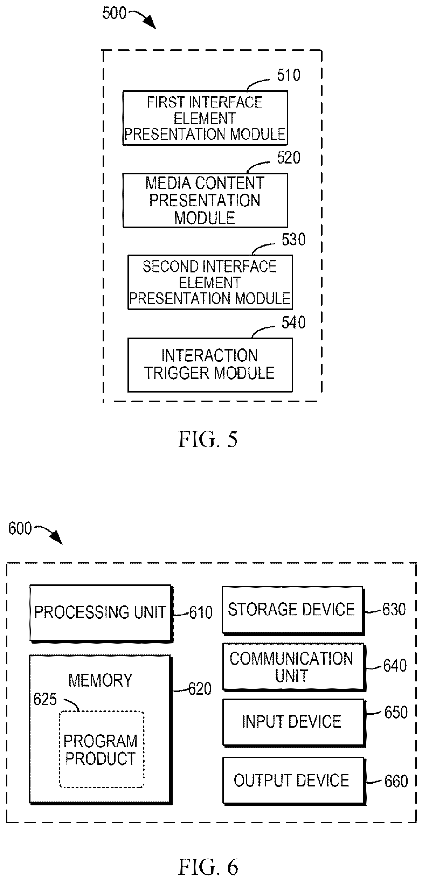

FIG. 5 illustrates a schematic structural block diagram of an apparatus for online live streaming 500 according to some embodiments of the present disclosure. The apparatus 500 may be implemented or included in the terminal device 110. The various modules/components in the apparatus 500 may be implemented by hardware, software, firmware, or any combination thereof.

As shown in the figure, the apparatus 500 includes a first interface element presentation module 510 configured to present, in a user interface of a live stream, a first interface element associated with an object in a live streaming content. The apparatus 500 further includes a media content presentation module 520 configured to, in response to receiving a predetermined operation on the first interface element, present a media content associated with the object in the user interface. The apparatus 500 further includes a second interface element presentation module 530 configured to present a second interface element in association with the media content. The apparatus 500 further includes an interaction trigger module 540 configured to, in response to receiving a predetermined operation on the second interface element, trigger, in the live stream, a predefined interaction associated with the object.

In some embodiments, the apparatus 500 further includes: a first interface element ceasing presentation module, configured to, in response to receiving no predetermined operation on the first interface element after the first interface element being presented for a duration exceeding a predetermined duration, cease the presenting of the first interface element.

In some embodiments, the second interface element presentation module 530 is further configured to, in response to a presentation of the media content approximating an end, present the second interface element.

In some embodiments, the media content presentation module 520 is further configured to present, with the live streaming content being maintained in a screen area of the user interface, the media content in a further screen area.

In some embodiments, the media content presentation module is further configured to provide a superposed display area in a screen area for the live streaming content in the user interface, for presenting the media content.

In some embodiments, the predefined interaction includes: presenting a predefined comment in the live stream, or inputting the predefined comment into a comment input box for user confirmation.

In some embodiments, the apparatus 500 further includes: a popular comment presentation module, configured to, in response to a number of the predefined comments in the live stream exceeding a threshold number, present the predefined comment as a popular comment at a predetermined position of the user interface.

In some embodiments, the first interface element includes a functional component. In some embodiments, the second interface element includes a clickable button.

In some embodiments, the first interface element is displayed with description information corresponding to the media content, and the second interface element is displayed with description information corresponding to the predefined interaction.

FIG. 6 illustrates a block diagram of an electronic device 600 in which one or more embodiments of the present disclosure may be implemented. It should be understood that the electronic device 600 illustrated in FIG. 6 is merely illustrative and should not constitute any limitation on the functionality and scope of the embodiments described herein. The electronic device 600 shown in FIG. 6 may be used for the terminal device 110 in FIG. 1 and/or the apparatus 500 in FIG. 5.

As shown in FIG. 6, the electronic device 600 is in the form of a general computing device. The components of electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and can execute various processes based on the programs stored in the memory 620. In a multiprocessor system, multiple processing units execute computer executable instructions in parallel to improve the parallel processing capability of the electronic device 600.

The electronic device 600 typically includes multiple computer storage medium. Such medium may be any available medium that is accessible to the electronic device 600, including but not limited to volatile and non-volatile medium, removable and non-removable medium. The memory 620 may be volatile memory (for example, a register, cache, a random access memory (RAM)), a non-volatile memory (for example, a read-only memory (ROM), an electrically erasable programmable read-only memory (EEPROM), a flash memory), or any combination thereof. The storage device 630 may be any removable or non-removable medium, and may include a machine readable medium such as a flash drive, a disk, or any other medium, which may be used to store information and/or data (such as training data for training) and may be accessed within the electronic device 600.

The electronic device 600 may further include additional removable/non-removable, volatile/non-volatile storage medium. Although not shown in FIG. 6, a disk driver for reading from or writing to a removable, non-volatile disk (such as a "floppy disk"), and an optical disk driver for reading from or writing to a removable, non-volatile optical disk may be provided. In these cases, each driver may be connected to the bus (not shown) by one or more data medium interfaces. The memory 620 may include a computer program product 625, which has one or more program units configured to perform various methods or acts of various embodiments of the present disclosure.

The communication unit 640 communicates with a further electronic device through the communication medium. In addition, functions of components in the electronic device 600 may be implemented by a single computing cluster or multiple computing machines, which can communicate through a communication connection. Therefore, the electronic device 600 may be operated in a networking environment using a logical connection with one or more other servers, a network personal computer (PC), or another network node.

The input device 650 may be one or more input devices, such as a mouse, a keyboard, a trackball, etc. The output device 660 may be one or more output devices, such as a display, a speaker, a printer, etc. The electronic device 600 may also communicate with one or more external devices (not shown) through the communication unit 640 as required. The external device, such as a storage device, a display device, etc., communicate with one or more devices that enable users to interact with the electronic device 600, or communicate with any device (for example, a network card, a modem, etc.) that makes the electronic device 600 communicate with one or more other electronic devices. Such communication may be executed via an input/output (I/O) interface (not shown).

According to example implementation of the present disclosure, a computer readable storage medium is provided, on which computer executable instructions are stored, wherein the computer executable instructions is executed by the processor to implement the method described above. According to example implementation of the present disclosure, a computer program product is also provided. The computer program product is physically stored on a non-transient computer-readable medium and includes computer-executable instructions, which are executed by the processor to implement the method described above.

Various aspects of the present disclosure are described herein with reference to the flow chart and/or the block diagram of the method, the apparatus, the device and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processing units of general-purpose computers, specialized computers or other programmable data processing devices to produce a machine that generates an apparatus to implement the functions/actions specified in one or more blocks in the flow chart and/or the block diagram when these instructions are executed through the computer or other programmable data processing apparatuses. These computer-readable program instructions may also be stored in a computer-readable storage medium. These instructions enable a computer, a programmable data processing apparatus and/or other devices to work in a specific way. Therefore, the computer-readable medium containing the instructions includes a product, which includes instructions to implement various aspects of the functions/actions specified in one or more blocks in the flowchart and/or the block diagram.

The computer readable program instructions may be loaded onto a computer, other programmable data processing apparatus, or other devices, so that a series of operational steps may be performed on a computer, other programmable data processing apparatus, or other devices, to generate a computer-implemented process, such that the instructions which execute on a computer, other programmable data processing apparatuses, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a unit, a program segment or instructions, which contains one or more executable instructions for implementing the specified logic function. In some alternative implementations, the functions labeled in the block may also occur in a different order from those labeled in the drawings. For example, two consecutive blocks may actually be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

**Each** implementation of the present disclosure has been described above. The above description is an example, not exhaustive, and is not limited to the disclosed implementations. Without departing from the scope and spirit of the described implementations, many modifications and changes are obvious to ordinary skill in the art. The selection of terms used in the present disclosure aims to best explain the principles, practical application or improvement of technology in the market of each implementation, or to enable other ordinary skill in the art to understand the various embodiments disclosed herein.

## Claims

1. A method for online live streaming, comprising:
presenting, in a user interface of a live stream, a first interface element associated with an object in a live streaming content;
in response to receiving a predetermined operation on the first interface element, presenting a media content associated with the object in the user interface;
presenting a second interface element in association with the media content; and
in response to receiving a predetermined operation on the second interface element, triggering, in the live stream, a predefined interaction associated with the object.

2. The method of claim 1, further comprising:
in response to receiving no predetermined operation on the first interface element after the first interface element being presented for a duration exceeding a predetermined duration, ceasing the presenting of the first interface element.

3. The method of claim 1, wherein presenting the second interface element in association with the media content comprises:
in response to a presentation of the media content approximating an end, presenting the second interface element.

4. The method of claim 1, wherein presenting the media content associated with the object comprises:
presenting, with the live streaming content being maintained in a screen area of the user interface, the media content in a further screen area.

5. The method of claim 1, wherein presenting the media content associated with the object comprises:
providing a superposed display area in a screen area for the live streaming content in the user interface, for presenting the media content.

6. The method of claim 1, wherein the predefined interaction comprises:
presenting a predefined comment in the live stream, or
inputting the predefined comment into a comment input box for user confirmation.

7. The method of claim 6, further comprising:
in response to a number of the predefined comments in the live stream exceeding a threshold number, presenting the predefined comment as a popular comment at a predetermined position of the user interface.

8. The method of any of claims 1-7, wherein the first interface element is displayed with description information corresponding to the media content, and the second interface element is displayed with description information corresponding to the predefined interaction.

9. An apparatus for online live streaming, comprising:
a first interface element presentation module configured to present, in a user interface of a live stream, a first interface element associated with an object in a live streaming content;
a media content presentation module configured to, in response to receiving a predetermined operation on the first interface element, present a media content associated with the object in the user interface;
a second interface element presentation module configured to present a second interface element in association with the media content; and
an interaction trigger module configured to, in response to receiving a predetermined operation on the second interface element, trigger, in the live stream, a predefined interaction associated with the object.

10. An electronic device comprising:
at least one processing unit; and
at least one memory coupled to the at least one processing unit and storing instructions for execution by the at least one processing unit, the instructions, when executed by the at least one processing unit, causing the electronic device to perform the method according to any of claims 1-8.

11. A computer readable storage medium having stored thereon a computer program executable by a processor to implement the method according to any of claims 1-8.
